(19)

**Europäisches Patentamt**
**European Patent Office**
**Office européen des brevets**

(11) **EP 2 464 175 A2**

(12) **EUROPEAN PATENT APPLICATION**

(43) Date of publication:
**13.06.2012 Bulletin 2012/24**

(51) Int Cl.:
**H04W 52/02** (2009.01)    **G08C 17/02** (2006.01)

(21) Application number: **10195049.1**

(22) Date of filing: **15.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.10.2010 US 391973 P**

(71) Applicant: **Stichting IMEC Nederland**
**5656 AE Eindhoven (NL)**

(72) Inventors:
- **De Francisco Martin, Ruben**
  **3512 HJ, Utrecht (NL)**
- **Zhang, Yan**
  **5583 GX, Waalre (NL)**

(74) Representative: **BiiP cvba**
**Culliganlaan 1B**
**1831 Diegem (Bruxelles) (BE)**

(54) **System and method for selective channel removal in multi-channel receivers**

(57)    The present invention is related to a method for detecting a transmitted wake-up signal in a wireless communication system comprising a plurality of communication nodes. The method comprises the steps of :
- receiving at a communication node of said plurality a transmitted wake-up signal, said wake-up signal being split over a plurality of frequency channels and a plurality of time slots,
- determining per frequency channel an indication of the signal quality on that frequency channel,
- deciding per frequency channel on removing the signal portion corresponding to that frequency channel, based on the indication of the signal quality, thereby obtaining a reduced received wake-up signal,
- correlating the reduced received wake-up signal with a version of a local copy of the transmitted wake-up signal,
- detecting the transmitted wake-up signal from the result of the correlation step.

Fig.2

EP 2 464 175 A2

**Description**

**Field of the Invention**

The present invention generally relates to wireless communication systems. In particular, it relates to the field of systems and methods for detecting a wake-up signal in a wireless sensor network.

**Background of the Invention**

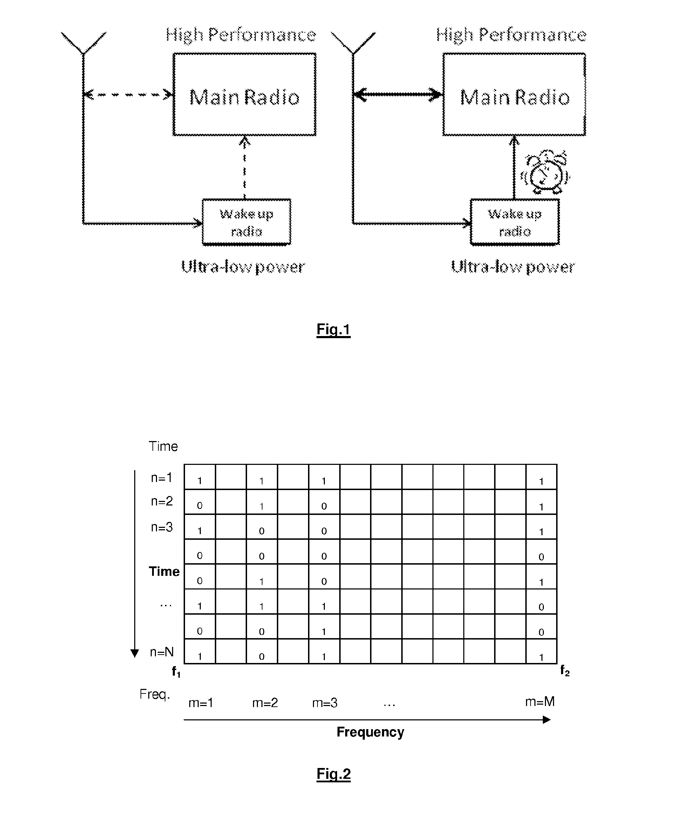

Increasing the lifetime of wireless sensor networks by means of energy efficiency enhancement has been a research focus over the past years, both in academia and industry. Idle listening, typically used by sensors in these networks, has a dramatic impact on the power consumption at the node. This can be particularly severe in networks with sporadic traffic but demanding latency requirements, where the node is required to check the channel frequently. To address this issue, wake-up radios have been recently introduced as a possible solution. A wake-up radio is a simplified receiver that consumes much less power than the high performance main radio with relaxed design targets, such as lower data rate and less sensitivity. The wake-up radio is used to realize continuous channel monitoring, while the main radio is in sleep mode for most of the time until a valid trigger signal is detected by the wake-up radio. An example of a wake-up radio assisted dual radio system is depicted in Fig. 1, where a wake-up radio enabled dualradio system is shown; with on the left the main radio in sleep mode and on the right the main radio woken up.

The main task of the receiver in wake-up radios or event-driven radios is to detect a wake-up packet conveying the node's local address or a known sequence, transmitted by another radio. In order to minimize the system complexity of wake-up or event driven radios, narrow-band transmission and simple modulation/demodulation techniques are typically considered, such as on-off keying (OOK) or binary phase-shift keying (BPSK). The receiver has to be able to successfully detect such wake-up event. This involves detecting the receiver's own local address (or a wake-up packet) that has been sent by the transmitter through a channel. In practice, this is typically done by transmitting the receiver's address over a single frequency channel (using a certain modulation technique, e.g. OOK or BPSK), and by using a matched filter or correlator to detect at the receiver side whether the local address is received.

In practice, the channel is corrupted by noise and interference, which impact the performance of the wake-up radio in terms of probability of detection (i.e. probability of detecting successfully the local address at the receiver when it was indeed transmitted) and the probability of false alarm (i.e. probability of detecting the local address at the receiver when it was not transmitted).

Typically the wake-up signal is transmitted on a single narrow-band channel. If an interferer is present for a long period of time, long latencies can result from multiple re-transmissions of the wake-up packet. This situation may occur often in scenarios where multiple technologies coexist, such as ZigBee and WiFi nodes operating in the 2.4 GHz ISM band. Indeed, in scenarios with a high level of interference, the described system may have low probability of detection, which translates into longer wake-up latency, i.e. longer time to detect the local address when it is transmitted through the channel. Due to the fact that a single frequency channel is used to transmit the receiver's address, this may provoke long wake-up latencies if an interferer is present for a long period of time. Typical solutions to combat this scenario include increasing the sequence length and/or increasing the transmit power.

Patent document US 7050775 B2 discloses a communication system in which a coded frequency modulated wake-up signal is transmitted in a time-frequency grid. Detection at the receiver side is performed with a matched filter. The wake-up signal contains tones transmitted at different time intervals, either sequentially or in parallel.

In US2009/252042 A1 a multi-channel receiver is proposed for implantable devices, for detecting wake-up signals, processing multiple frequency channels in parallel. The described system makes sense mostly in a situation with very asymmetric power budget, i.e., the transmitter has less power limitations, whereas at the receiver it is desired to lower power consumption as much as possible. Therefore power consumption is reduced by only processing channels where no unwanted signals are present. If a frequency channel is processed and the received signal does not contain a valid wake-up signal (i.e. does not contain the local ID), the receiver stores the quantized received signal strength as a signature, which is identified locally as an unwanted signal. For every channel, the received power is firstly compared to a power/energy threshold. Next, the receiver checks if the received power matches the signal strength of signatures previously selected as unwanted. If there is no match, then the given frequency channel is processed (not restricted).

In applications where low latencies are required, a possible solution is to exploit frequency diversity. However, it is desirable to design a system in which the performance in the presence of interference is improved, while limiting the receiver processing complexity.

**Aims of the invention**

The present invention aims to provide a method for detecting a wake-up signal whereby the performance in the presence of interference is improved as compared to the prior art solutions, while the processing complexity is limited. The invention further aims to provide a communication device for use in the method.

## Summary

The present invention relates in a first aspect to a method for detecting a transmitted wake-up signal in a wireless communication system comprising a plurality of communication nodes. The method comprises the steps of :

- receiving at a communication node of said plurality a transmitted wake-up signal, said wake-up signal being split over a plurality of frequency channels and a plurality of time slots,
- determining per frequency channel an indication of the signal quality on that frequency channel,
- deciding per frequency channel on removing the signal portion corresponding to that frequency channel, based on the indication of the signal quality, thereby obtaining a reduced received wake-up signal,
- correlating said reduced received wake-up signal with a corresponding version of a local copy of the transmitted wake-up signal,
- detecting the transmitted wake-up signal from the result of the correlation step.

The proposed solution indeed achieves the goal of reduced complexity : by removing one or more portions of the received signal corresponding to one or more frequency channels, less information needs to be processed to perform the correlation. As less channels need to be processed, the receiver processing complexity and consequently the power consumption can be reduced.

In an advantageous embodiment the indication of the signal quality takes into account the ratio of estimated noise-plus-interference power to the average received signal power in the frequency channel.

In one embodiment the method of the invention further comprises generating the wake-up signal. This step is obviously performed at the transmitter side. The wake-up signal to be transmitted is preferably formed by arranging a predetermined signal over the plurality of frequency channels and the plurality of time slots. Hence, a signal matrix is actually designed. The signal matrix represents information about the address of the node to be woken up. The information is advantageously coded by means of a code having good cross-correlation properties, like a Walsh-Hadamard sequence, a Gold code or a maximum length sequence.

In a preferred embodiment the frequency channels have a frequency spacing so selected that interference between channels is reduced.

In a second aspect the invention relates to a communication device for detecting a wake-up signal. The device comprises

- receiver means for receiving a transmitted wake-up signal, said wake-up signal being split over a plurality of frequency channels and a plurality of time slots,
- processing means arranged for determining per frequency channel an indication of the signal quality on that frequency channel and for deciding per frequency channel on removing the signal portion corresponding to that frequency channel, based on said signal quality indication, thereby yielding a reduced received wake-up signal,
- correlator means for correlating said reduced received wake-up signal with a version of a local copy of the transmitted wake-up signal.

In a preferred embodiment the communication device contains processing means provided with a channel selection mechanism for taking the decision on removing. The channel selection mechanism is thereby preferably arranged for setting an adaptable threshold level for taking said decision on removing bad channels. The channel selection mechanism is arranged for setting the number of frequency channels to be taken into account in the correlator.

The invention also relates to a wireless communication system comprising a plurality of communication devices as previously described.

In one embodiment the wireless communication system further comprises a transmitter device.

## Brief Description of the Drawings

Presently preferred embodiments are described below in conjunction with the appended drawing figures, wherein like reference numerals refer to like elements in the various figures, and wherein:

Fig. 1 illustrates an example of a wake-up radio assisted dual radio system.

Fig. 2 illustrates an example of an address matrix.

Fig. 3 illustrates a block diagram for performing non-coherent detection of two OOK parallel channels.

Fig. 4 illustrates a block diagram of multi-channel wake-up receiver.

Fig. 5 illustrates an interference scenario.

Fig. 6 illustrates the frequency channel plan of IEEE 802.11g vs. IEEE 802.15.4.

Fig. 7 illustrates a plot of the probability of false alarm for different single channel and multi-channel address correlators.

Fig. 8 illustrates a plot of the probability of missed detection for different single channel and multi-channel address correlators.

## Detailed Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

Furthermore, the terms first, second, third and the like in the description are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description are used for descriptive purposes and not necessarily for describing relative positions. The terms so used are interchangeable under appropriate circumstances and the embodiments of the invention described herein can operate in other orientations than described or illustrated herein.

The term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present description, the only relevant components of the device are A and B.

In wake-up radios or event-driven radios the receiver has to be able to detect wake-up packets transmitted by another radio. A wake-up packet contains address information of the intended wake-up receiver. The chosen modulation to transmit the address vector is in a preferred embodiment on-off keying (OOK), which is the simplest form of amplitude-shift keying (ASK) modulation. The binary digital data represents the presence or absence of a carrier within the symbol duration time.

According to the present invention a solution is proposed in which the address to be transmitted is split over several frequency channels. Hence, instead of transmitting an address vector as in most prior art solutions, in the proposed method an address matrix is transmitted over a time-frequency grid, using a predefined number of time slots and frequency channels (also called frequency bins). At the receiver side, a matched filter or correlator is used to detect the transmitted address. The correlation between the local address matrix and the received address matrix is measured to detect whether the local address was indeed received. In order to improve the performance and reduce complexity, the channels (columns of the received address matrix) experiencing low signal-to-interference-plus-noise ratio (SINR) levels are removed and are not processed in the receiver correlation operation. A given channel is removed if the ratio of the estimated noise-plus-interference power in the channel over the average received signal power in that channel is above a selectable threshold.

A transmitter sends the address of a receiver using multiple frequency channels, which has to be detected at the receiver side. In order to generate the address, an address vector of length $N \cdot M$ is generated, using a standard address code, such as Walsh-Hadamard sequence, maximal length sequence, Gold code, etc...The resulting vector is split into M blocks, each containing a sub-vector of N elements and reshaped into a matrix of size $N \times M$, the address matrix. So, in an embodiment of the invention, each column in the matrix ($m = 1,...,M$) corresponds to a different frequency channel, while each row corresponds to a different time slot ($n = 1,...,N$). The generated address is transmitted through a time-frequency grid. The following are input parameters : center frequency of each channel, bandwidth of each channel, symbol period (time slot duration) and modulation technique used (e.g. OOK, BPSK, etc). The channels used do not need to be adjacent and thus may be separated by an arbitrary bandwidth.

The address matrix may be represented as follows:

$$W = \begin{bmatrix} w_{11} & w_{12} & \cdots & w_{1M} \\ w_{21} & w_{22} & \cdots & w_{2M} \\ \vdots & \vdots & \ddots & \vdots \\ w_{N1} & w_{N2} & \cdots & w_{NM} \end{bmatrix}$$

where the $W_{nm}$ element denotes the symbol transmitted over the n-th time slot and m-th frequency bin (channel). An example of an address matrix transmitted over the resulting time-frequency grid is shown in Fig.2.

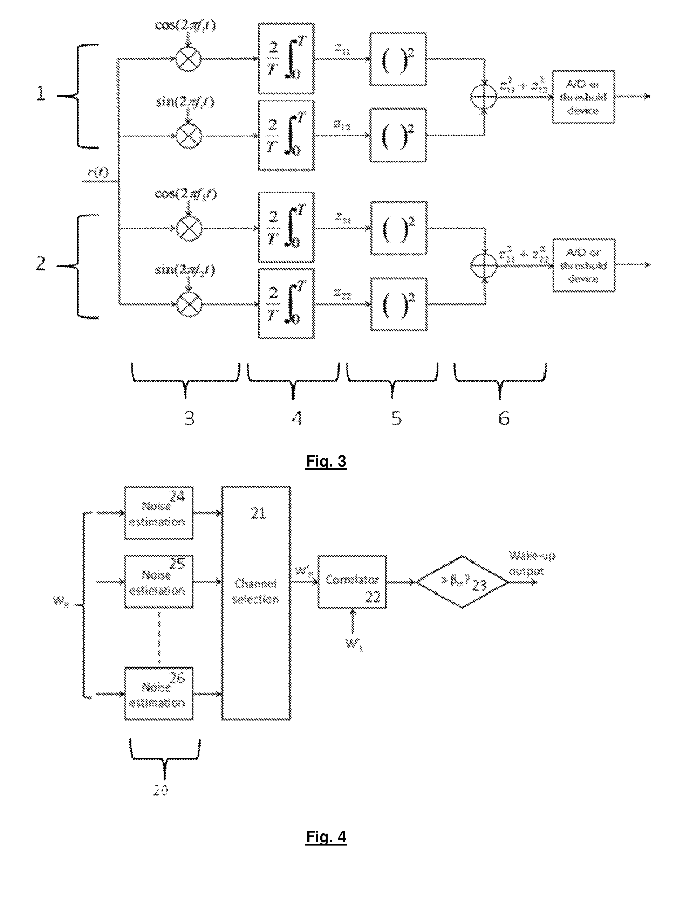

At the receiver side, the first task carried out is the demodulation of the multi-channel signal r(t). When a multi-channel OOK signal is used to transmit the address matrix, a multi-channel detector is used. This task is done in parallel, as depicted in Fig.3, where the detection of two parallel OOK channels is shown. The non-coherent multi-channel OOK detector is based on a modified non-coherent frequency-shift keying (FSK) detector. The difference is that here all channels bear information (either a logic 1 or 0), whereas in the FSK system only a channel may be active since information bits are coded by the frequency deviation. Hence, the non-coherent FSK detector requires an additional decision stage to compare the output of each detection branch, while in the proposed receiver all branches are quantized (or compared to a threshold).

Taking as an example a 2-channel case, the received signal may be represented in the absence of noise and interference as

$$r(t) = A_1 \cos(2\pi f_1 t + \phi_1) + A_2 \cos(2\pi f_2 t + \phi_2)$$

Let $\omega1 = 2\pi f_1$ and $\omega2 = 2\pi f_2 = \omega_1 + \Delta\omega$. Note that signals may be present at both $f_1$ and $f_2$ carriers and thus both $A_1$ and $A_2$ may be non-zero. In order to better understand the output on the i-th branch, $z_{i1}^2 + z_{i2}^2$, here the result is shown at the output for i = 1. After the first integration and multiplication stage, one has

$$z_{11} = \frac{2}{T} \int_0^T [A_1 \cos(\omega_1 t + \phi_1) + A_2 \cos(\omega_2 t + \phi_2)] \cos(\omega_1 t) dt$$

Solving the above integral one finds that

$$z_{11} \approx A_1 \cos(\phi_1) + \frac{2A_2}{\Delta\omega T} \sin\left(\frac{\Delta\omega T}{2}\right) \cos\left(\frac{\Delta\omega T + 2\phi_2}{2}\right)$$

where the approximation $\varepsilon / \omega_n \approx 0$ for $-1 \le \varepsilon \le 1$ has been used. Similarly, it can be shown that $Z_{12}$ becomes :

$$z_{12} \approx A_1 \sin(\phi_1) - \frac{2A_2}{\Delta\omega T} \sin\left(\frac{\Delta\omega T + 2\phi_2}{2}\right) \sin\left(\frac{\Delta\omega T}{2}\right)$$

After the squaring and addition operation one can approximate $z_{i1}^2 + z_{i2}^2$ as follows :

$$z_{11}^2 + z_{12}^2 \approx A_1^2 + \left( \frac{2A_2}{\Delta\omega T} \sin\left( \frac{\Delta\omega T}{2} \right) \right)^2$$

$$+ \frac{2A_1 A_2}{\Delta\omega T} \left[ \sin(\Delta\omega T + \phi_1 + \phi_2) - \sin(\phi_1 + \phi_2) \right]$$

Ideally, on this first branch only the first term is desired in the equation above, $A_1^2$. The second term accounts for the interference from the second branch, whereas the third term corresponds to the intermodulation product. Defining $P_I$ as the power from the interfering branch, one finds that the worst case scenario happens when $\Delta\omega.T = \pi$ and $\varphi1 + \varphi2 = -\pi/2$, leading to

$$P_I = \left( \frac{2A_2}{\Delta\omega T} \right)^2 + \frac{4A_1 A_2}{\Delta\omega T}.$$

On the other hand, if a channel spacing of $\Delta\omega = 2\pi/T$ can be perfectly set, one has that $P_1 = 0$, and thus each branch can be perfectly detected without interference from other branches. In the remainder of this description it is for simplicity assumed that the optimal channel spacing is used. The skilled person can readily adapt this to a scenario wherein such an optimal spacing is not applied.

The detection operation is carried out at each branch (1), (2) of the OOK detector for N consecutive symbols, for a total of M branches (from M frequency channels). After a multiplication (3) and integration stage (4), a squaring (5) and addition (6) operation are performed. The combined output is the received address matrix $W_R$, which may coincide or not with the local address matrix.

The received matrix (20) is fed to a channel selection mechanism (21), followed by a correlator (22), as shown in Fig.4. The noise power is computed at each branch (24), (25), (26), which can be done by monitoring the energy level on the channel even when there is no signal coming in. The estimated noise at the m-th channel, denoted as $P_n(m)$ corresponds in fact to the noise-plus-interference power in the channel.

For the described system with multi-channel transmission, a method is proposed to remove bad channels at the receiver (21). The channel (matrix) columns removed are those experiencing low SINR levels.

The decision whether or not to remove the m-th channel is dependent on the ratio of the estimated noise-plus-interference power in the channel, $P_n(m)$, over the average received signal power in that channel, $P_r(m)$. If the ratio is above a selectable threshold $\theta$, the m-th column of the received address matrix is removed.

$$\alpha(m) = \frac{P_n(m)}{P_r(m)} \begin{cases} > \theta, & \text{removed} \\ \leq \theta, & \text{kept} \end{cases}$$

This operation is preferably carried out for all M columns in the received matrix $W_R$. The ordered indices of the columns kept are denoted as $I$. The receiver processing complexity can be further controlled by setting a maximum number of matrix columns that are kept, denoted as $N_I^{max}$. If the number of columns selected in the previous process is higher than $N_I^{max}$, then the columns with lowest $\alpha(m)$ coefficent are kept.

The modified received address matrix $W'_R$ (output of (21)) contains only those columns that are not deleted in the previous process. The correlation operation (22) is performed based on the local address of reduced dimensionality $W'_L$. This matrix is formed from the local matrix $W_L$ of dimension NxM, by taking only those columns specified by the indices in $I$.

The correlation operation (22) at the receiver yields a coefficient $\beta = tr[W'_R{}^H W'_L]$, where $tr[\cdot]$ computes the trace, and $H$ denotes Hermitian transposition. The correlation coefficient between the local and received addresses is compared to a threshold $\beta th$ (23): If $\beta \geq \beta th$, the receiver decides that the received address is the local address.

In order to illustrate the benefits of the multi-channel low power wake-up radio solution according to the invention as compared to a single channel low power wake-up radio, some simulation results are now presented. The simulations have been carried out with the following parameters and settings. In the multi-channel case the address matrix is transmitted in 8 timeslots on 16 channels. In the single channel case the address matrix is transmitted in 128 timeslots on a single channel or is transmitted in 8 timeslots on a single channel with 12 dB ($\approx 10\log_{10}16$) power gain for a fair comparison. OOK symbols are transmitted over each frequency channel (multi-channel OOK) at a rate of 1 Msps. Hence, the bandwidth of each frequency channel is 1 MHz and each time slot spans 1 $\mu$s. Walsh-Hadamard codes are used to generate the addresses.

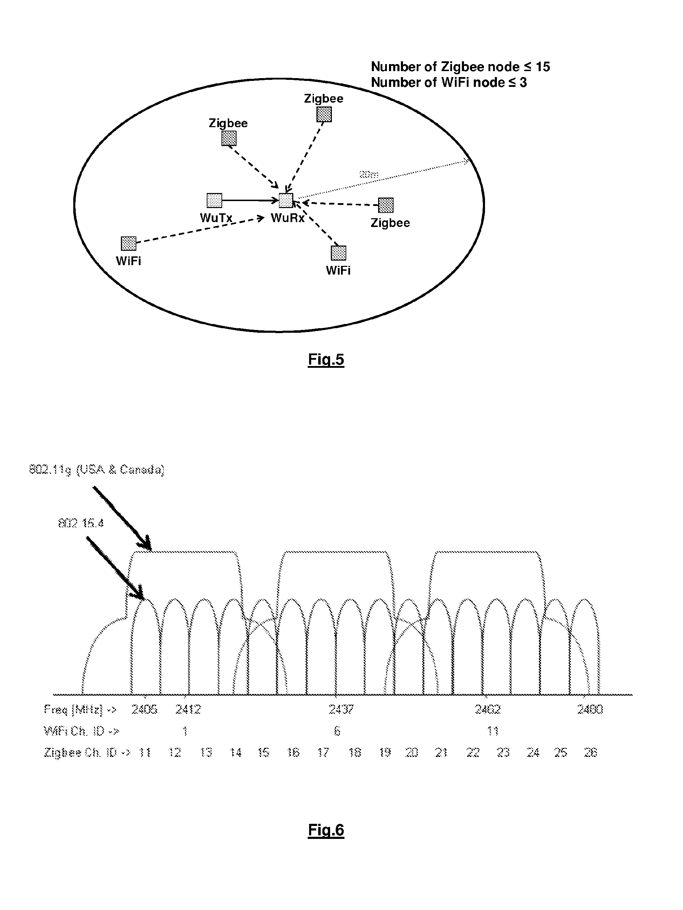

In a real transmission environment different channels can confront very different link qualities. Some channels might be greatly deteriorated due to a strong interference nearby, such as a Wi-Fi transmitter. Additive Gaussian white noise (AWGN) channel is assumed in the simulation. As illustrated in Fig.5, a realistic interference scenario containing Wi-Fi and ZigBee nodes is considered in the simulation. Every time a wake-up packet is generated, a random number of active Wi-Fi nodes is considered, ranging from 1 to 3, located in the neighborhood. At the same time, a random number of active ZigBee nodes are present, which might reach up to 15.

It is further assumed that the Wi-Fi and ZigBee nodes dwell on nonoverlapping frequency channels. On account of the channel plan of IEEE 802.11g (Wi-Fi) and IEEE 802.15.4 (ZigBee), shown in Fig.6, the concurrent accessed number of nodes might be much less than the amount of existing nodes, depending on the real channel occupation. The locations of the Wi-Fi and ZigBee nodes are distributed randomly within 20 meter around the wake up receiver. The distance between the wake up transmitter and receiver ranges from 1 to 20 meter to evaluate the interference robustness performance under different wanted signal powers.

The transmission power of the Wi-Fi is 20 dBm for downlink and 15 dBm for uplink. The transmission power of the ZigBee node and the wake-up signal is 0 dBm. Since no spectrum sensing information is acquired by the wake up radio, wake up channels are selected randomly with equal spacing on the same ISM band. In case of 16 wake-up carriers, the distance between two adjacent wake-up carriers is 4 MHz.

By making use of the power spectrum density (PSD) information of the Wi-Fi and ZigBee transmitters, the interference power at the wake-up receiver end can be calculated for each 1MHz frequency channel, taking the path loss into account. A free-space path loss model is used in the simulation, given by

$$L_{path} = 20 \log_{10}(d) + 20 \log_{10}(f_c) - 147.55$$

where d indicates the distance between the transmitter and the receiver, $f_c$ represents the carrier frequency of a given channel in Hz and $L_{path}$ is expressed in dB.

Partial packet collisions in the time domain are not considered. This means that if interference is present when a wake-up packet starts to be transmitted, it is assumed that the interferer transmits during the whole duration of the wake-up packet. On the other hand, if no interference is present when a wake-up packet starts to be transmitted, the channel remains interference-free during the whole wake-up packet transmission.

In the ultra-low power non-coherent detection of the considered wake-up radio system, an envelope detector is used to down-convert the RF signal to the baseband. The square law feature inherent to the envelope detector introduces nonlinearity to the system. If the original signal received at the receiver end is $y = hx + n$, after the envelope detector, the signal becomes $y^2 = (hx + n)^2$. Since the signal and the white noise are assumed non-coherent, the signal after the envelope detector can be approximated by $y^2 = h^2 x^2 + n^2$. Therefore, in the simulation the address detection is performed on $h^2 x^2 + n^2$.

One way to have a rough estimation of the noise-plus-interference level is that the receiver accumulates the energy on the channel even when there is no wanted signal coming in. Therefore, if the channel condition is not changed promptly, the receiver can collect some basic knowledge of noise-plus-interference level.

For comparison, also a linear MMSE filter is simulated, which has the same knowledge as the proposed approach (noise-plus-interference power and average received signal power). The linear filter coefficients used to weigh each matrix column are given in this case by

$$\alpha_{MMSE}(m) = \frac{\sqrt{P_r(m)}}{P_r(m) + P_n(m)}$$

According to the received signal strength and the estimated noise level, different weights are applied to the signal on each channel in the MMSE solution. Note that the proposed method for removal of channels can be seen as a linear receiver with filter coefficients 1 or 0, depending on whether a column is kept or deleted, respectively.

In the simulation, the $\alpha$ and $\alpha_{MMSE}$ values are calculated with floating point numbers. Afterwards, the signal is quantized into 4-bit fixed point numbers. With the local address and the processed received address, cross-correlation can be calculated. The correlation result is compared with a threshold to make the decision if the received address code is correct or not.

For all the simulated systems the following constraint is added : in one embodiment, the probability of false alarm should be less than 1% (this limits the power consumption at the receiver). Based on this rule, suitable decision thresholds are chosen such that the missed detection probability for each approach is minimized. Hence, the performance comparison between all the simulated systems consists in comparing the missed detection probability performance (or equivalently, the detection probability).

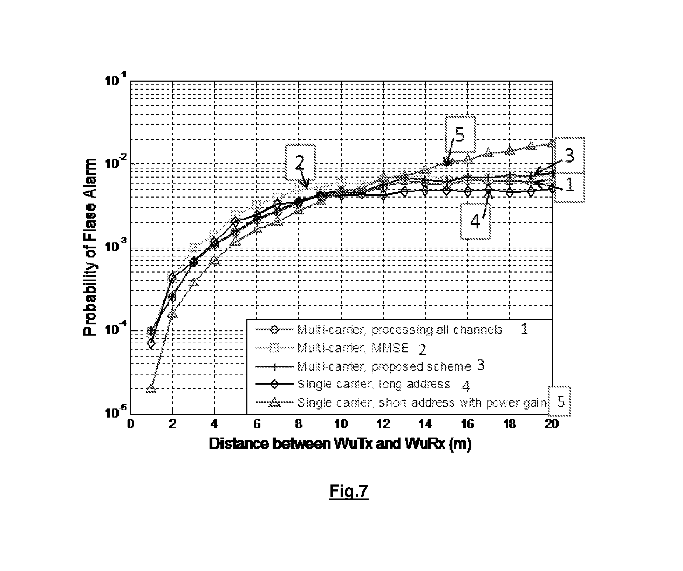

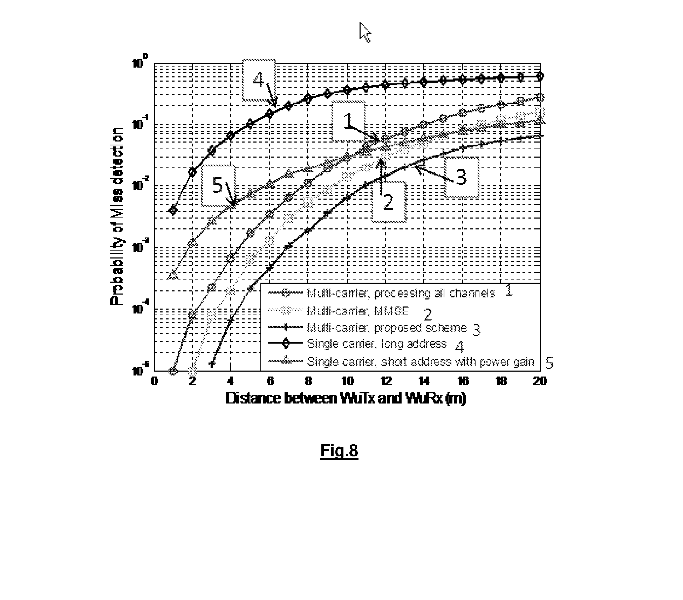

In one embodiment of the proposed method with channel removal, the threshold $\theta$ used to delete a bad channel is 2, which means if the estimated noise power is larger than twice the average signal power, the channel is deleted. The simulated false alarm probabilities over different wake-up transmission distances are given in Fig.7, which demonstrates the consistency with the observation constraint. Accordingly, the resulting missed detection probabilities are depicted in Fig.8.

By increasing the wake-up transmission distance and keeping the interference scenario unchanged, it can be seen how the effect of the unwanted interference increases and, hence, the system performance decreases. By comparing the multi-channel schemes against the single channel case in Fig.8, one can see the address detection performance has gained significant improvement by sending the address matrix across multiple frequency carriers. Especially, the performance gain with the multi-carrier schemes is higher when the distance between wake-up transmitter and receiver is moderate. In such cases, the frequency diversity can be effectively exploited, benefiting from those channels that experience good signal to interference-plus-noise ratio (SINR) levels. For instance, with a wake-up transmission distance of four meters, the miss detection probability is decreased by three orders of magnitude with the proposed multi-carrier scheme in contrast to the single carrier case.

As shown in Fig.8, the performance of the proposed multi-channel scheme is even better than the MMSE multi-channel case. This stems from the fact that only very limited knowledge, such as estimated noise power and average received signal power, are available at the receiver end. Hence, the MMSE coefficients are based on inaccurate estimation, which makes the resulting MMSE scheme no longer the optimal linear filter. In contrast, the proposed multi-channel scheme boosts the performance with a simple channel selection mechanism. Furthermore, since not all the address columns are processed, the proposed multi-carrier scheme brings additional power efficiency benefit.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to including any specific characteristics of the features or aspects of the invention with which that terminology is associated.

While the above detailed description has shown, described, and pointed out novel features of the invention as applied to various embodiments, it will be understood that various omissions, substitutions, and changes in the form and details of the device or process illustrated may be made by those skilled in the technology without departing from the spirit of the invention.

**Claims**

1. A method for detecting a transmitted wake-up signal in a wireless communication system comprising a plurality of communication nodes, the method comprising the steps of :

   - receiving at a communication node of said plurality a transmitted wake-up signal, said wake-up signal being split over a plurality of frequency channels and a plurality of time slots,
   - determining per frequency channel an indication of the signal quality on that frequency channel,
   - deciding per frequency channel on removing the signal portion corresponding to that frequency channel, based on the indication of the signal quality, thereby obtaining a reduced received wake-up signal,
   - correlating said reduced received wake-up signal with a corresponding version of a local copy of the transmitted wake-up signal,
   - detecting the transmitted wake-up signal from the result of the correlation step.

2. Method for detecting a transmitted wake-up signal as in claim 1, whereby said indication of the signal quality takes into account the ratio of estimated noise-plus-interference power to the average received signal power in the frequency channel.

3. Method for detecting a transmitted wake-up signal as in claim 1 or 2, further comprising the step of generating said wake-up signal.

4. Method for detecting a transmitted wake-up signal as in claim 3, whereby said generating comprises arranging a predetermined signal over said plurality of frequency channels and said plurality of time slots to form the wake-up signal to be transmitted.

5. Method for detecting a transmitted wake-up signal as in any of the previous claims, wherein said wake-up signal comprises information about the address of the node to be woken up.

6. Method for detecting as in claim 5, wherein said information is coded with a Walsh-Hadamard sequence, a Gold code or a maximum length sequence.

7. Method for detecting as in any of the previous claims, whereby said frequency channels of said plurality have a frequency spacing so selected that interference between channels is reduced.

8. Communication device for detecting a wake-up signal comprising

- receiver means for receiving a transmitted wake-up signal, said wake-up signal being split over a plurality of frequency channels and a plurality of time slots,
- processing means arranged for determining per frequency channel an indication of the signal quality on that frequency channel and for deciding per frequency channel on removing the signal portion corresponding to that frequency channel, based on said signal quality indication, thereby yielding a reduced received wake-up signal,
- correlator means for correlating said reduced received wake-up signal with a version of a local copy of the transmitted wake-up signal.

9. Communication device as in claim 8, whereby said processing means comprises a channel selection mechanism for taking the decision on removing.

10. Communication device as in claim 9, wherein said channel selection mechanism is arranged for setting an adaptable threshold level for taking said decision on removing.

11. Communication device as in claim 9 or 10, wherein said channel selection mechanism is arranged for setting the number of frequency channels to be taken into account in the correlator.

12. Wireless communication system comprising a plurality of communication devices as in any of claims 8 to 11.

13. Wireless communication system as in claim 12, further comprising a transmitter device

**Fig.1**

**Fig.2**

**Fig. 3**

**Fig. 4**

**Number of Zigbee node ≤ 15**
**Number of WiFi node ≤ 3**

<u>Fig.5</u>

<u>Fig.6</u>

Fig.7

**Fig.8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7050775 B2
- US 2009252042 A1